# EUROPEAN PATENT SPECIFICATION

(11) **EP 1 356 137 B1**
(45) Date of publication and mention of the grant of the patent: **06.10.2004**
(21) Application number: 02718044.7
(22) Date of filing: 24.01.2002
(51) Int. Cl.: C25D 1/08, C25D 5/50, F27B 9/12, F27B 9/14, F27B 9/28

(54) **METHOD FOR PRODUCING METAL FOAMS AND FURNACE FOR PRODUCING SAME**
VERFAHREN ZUR HERSTELLUNG VON METALLSCHÄUMEN UND OFEN ZUR HERSTELLUNG DIESER
PROCEDE DE PRODUCTION DE MOUSSES METALLIQUES ET FOUR PERMETTANT DE PRODUIRE LESDITES MOUSSES METALLIQUES

(30) Priority: 25.01.2001 LU 90721
(43) Date of publication of application: 29.10.2003
(73) Proprietor: EFOAM S.A., 2930 Luxembourg (LU)
(72) Inventor: KUHN, Marc, L-4397 Pontpierre (LU); MICHEL, Damien, J2L 2S1 Bromont (CA)
(74) Representative: Schmitt, Armand
(86) International application number: PCT/EP2002/000714
(87) International publication number: WO 2002/059396

(56) References cited:
- EP-A- 0 075 438
- EP-A- 0 801 152
- EP-A- 1 052 321
- GB-A- 624 175
- US-A- 3 695 869
- PATENT ABSTRACTS OF JAPAN vol. 1998, no. 06, 30 April 1998 (1998-04-30) & JP 10 046268 A (JAPAN METALS &CHEM CO LTD), 17 February 1998 (1998-02-17) -& DATABASE WPI Week 199817 Derwent Publications Ltd., London, GB; AN 1998-189679 XP002180063 & JP 10 046268 A (JAPAN METALS & CHEM CO LTD), 17 February 1998 (1998-02-17)

## Description

### Field of the invention

The present invention generally relates to a method for producing metal foams from metal-coated polymer structures and to a furnace for producing metal foams.

### Background of the invention

The production of metal foams for the manufacturing of batteries is currently an important issue. In particular, nickel foam is largely used in the manufacture of batteries.

Conventionally, nickel foam is produced by firstly depositing nickel on a polymer foam substrate, e.g. polyurethane foam, and then subjecting the nickel-coated polymer substrate to a thermal treatment. Such a thermal treatment is generally carried out in a continuous belt furnace with three zones. The nickel-coated polymer substrate, laid on the conveyor belt, firstly travels through an oxidizing zone in which it is exposed to a high temperature and to free oxygen, whereby the polymer is burned. The polymer substrate is thus removed, leaving an oxidized nickel foam structure. Next to the oxidizing zone is a reducing and annealing zone, in which the oxidized nickel foam structure is exposed to a reducing atmosphere, generally pure hydrogen, and to high temperatures. Treating the oxidized nickel foam structure in this reducing and annealing zone causes the nickel oxides formed in the first zone to return to a metallic state, the annealing step enhances the mechanical properties i.a. the ductility of the nickel foam structure. Finally, the ductile nickel foam structure enters a cooling zone, in which it is cooled down in a controlled atmosphere of nitrogen and hydrogen.

Such a thermal treatment has many drawbacks. Firstly, burning the polymer in free oxygen allows the removal of the polymer substrate, but it unfortunately also causes oxidation of the metallic nickel. The oxidized nickel structure must then be reduced in a reducing atmosphere after the polymer removal, which complicates the treatment Furthermore, the oxidized nicker structure is very brittle and fragile. Therefore the brittle, oxidized nickel structure has to be supported on a conveyor belt in the furnace. These conveyor belts are very heavy as compared to the nickel structure and are generally made of special refractory steel. Because of the repeated heating and cooling cycles, the conveyor belts need to be replaced frequently. The conveyor belt has a negative influence on the energy balance of the process since not only the comparatively light nickel structure needs to be heated and cooled but also the comparatively heavy conveyor. belt structure. Another drawback of this process is the use of pure hydrogen, which increases the production costs and which is dangerous to handle.

JP 10 064268-A discloses a method for producing a porous Ni-Cr alloy. A slurry containing Ni and Cr metallic powders is coated onto a foamed resin. The coated product is heated at a temperature between 700 and 900°C in a reducing gas atmosphere containing water vapour or carbon dioxide gas, whereby the foam is thermally degraded and the carbon content is removed. The resulting product is then sintered by heating in at a temperature between 1100 and 1300°C to yield a porous Ni-Cr alloy. The water vapour or carbon dioxide content is in the range of 2.5 to 30 vol.%; an amount higher than 30 vol.% resulting in an over oxidation of the metal. The reducing gas is hydrogen or ammonia decomposition gas.

US-A-3 695 869 describes a method for producing fibrous metal material, wherein a conductive carbon skeleton is prepared and a metal or alloy is deposited on the carbon skeleton by chemical or electrolytic method. The resulting product is then subjected to an oxidation operation at high temperature for eliminating the skeleton either in a hydrogen atmosphere containing a suitable proportion of water vapour or in air.

### Object of the invention

The object of the present invention is to provide a simpler method for producing a metal structure from metal-coated polymer substrates. This is achieved by a method as claimed in claim 1.

### Summary of the invention

A method for producing a metal structure in accordance with the invention proposes to treat a metal-coated polymer structure in a hot zone, in which a temperature of at least 600°C prevails as well as an atmosphere essentially composed of water vapor. The water vapor is injected and maintained. In the hot zone, the polymer substrate is thermally decomposed and reacts with the water vapor. The oxidation reaction intervening is an endothermic reaction known as "water gas" reaction, noted C + H₂O ⇔ CO + H₂. According to this equation, the carbon of the polymer reacts with the water vapor to form carbon monoxide and hydrogen. In particular, as opposed to conventional methods using free oxygen to bum the Polymer, the oxidizer employed to remove the polymer is water vapor and the metal-coated polymer substrate is not exposed to free oxygen. The hot zone contains at least 80 to 85 vol.% of water vapor, more preferably about 90 vol.% and most preferably about 100 vol.%.

After the polymer has been removed, a metal structure remains. It shall be noted that the water vapor is, under the conditions employed, only oxidizing to carbon and the metal is not oxidized. As the metal is not oxidized during removal of the polymer, no specific reducing treatment is needed. In particular, the metal structure is not exposed to an atmosphere containing high concentrations of hydrogen. This means that the conventional reducing step in pure or highly concentrated hydrogen is not required any more. In fact, in the method according to the present invention the use of hydrogen is not required at all. The manufacturing costs are thus reduced and the risks involved with the use of pure or highly concentrated hydrogen are eliminated.

After the hot zone, the metal structure is cooled down under controlled conditions in a cooling zone, preferably having a non-oxidizing atmosphere. Although, as already mentioned, the present method does not require the use of hydrogen, it will be understood that in industrial producing conditions, hydrogen may be used at very low concentrations in the cooling zone to compensate for air leaks.

The treatment of the metal-coated polymer substrate in the hot zone allows for the removal of the polymer substrate without oxidizing the metal initially supported thereon.

It shall be noted that the high temperature prevailing in the hot zone has the effect of a thermal or annealing treatment on the metal structure. It increases the strength of the metal structure and confers a good ductility to the latter.

A further advantage of the method is that since the metal is not oxidized, it does not become brittle. The metal foam structure formed in the hot zone is self-supporting and is easier to handle.

The method of the invention is thus a simpler method for producing a metal structure from a metal-coated polymer structure. The metal coating may consist of a variety of metals such as e.g. nickel, copper, iron, chromium, zinc, aluminum, lead, tin, gold, platinum or other metals belonging to the platinumgroup, and their alloys, as well as other metals and alloys, which are sufficiently noble to resist oxidation in water vapor at elevated temperatures.

The method is particularly suitable for the production of copper foam structures from copper-coated polymer substrates or nickel foam structures from nickel-coated polymer substrates. In practice, the method proves economical and easy to implement, as the gases employed are cheaper and less dangerous. Indeed, the method of the invention permits to obtain a ductile metal structure by means of water vapor in one step. In particular, the present method does not require a reducing step in a hydrogen atmosphere to reduce the metal structure, since in the present method the metal is not oxidized during polymer decomposition.

It is to be noted that since no free oxygen is employed in the hot zone and that, if hydrogen is present in the cooling zone, it is present only at low concentrations, the gases contained in the cooling zone may be advantageously introduced in the hot zone. The energy contained in the gases of the cooling zone can thus be used in the hot zone. This is especially true if the hydrogen content is less than 5 vol.%, which is below the explosion limit according to the standards applied in industrial furnaces. In the conventional methods, it is of course not possible to allow the gases from one zone to flow into another zone since the oxidizing zone contains oxygen and the reducing zone contains hydrogen.

In order to simplify handling and increase productivity, the method of the invention is advantageously performed in a furnace assembly configured in such a way as to allow the metal-coated polymer substrate, respectively the metal structure, to be continuously guided through the hot zone and through the cooling zone.

Preferably, the temperature in the hot zone is of at least 650°C, more preferably of about 750 to 950°C and most preferably from about 900 to 950°C. The annealing temperature is chosen as a function of the ductility of the metal structure to be obtained.

Maintaining an inert or slightly reducing atmosphere in the cooling zone prevents oxidation of the metal structure during cooling. A suitable inert gas is nitrogen. However, an atmosphere essentially composed of nitrogen and hydrogen is preferably maintained in the cooling zone. As already mentioned, it is advantageous to have a low hydrogen content in the cooling zone to compensate for air leaks. Most preferably, the hydrogen content is not above 5 per cent in volume. Such hydrogen content allows to obtain a protective, slightly reducing atmosphere and is not problematic with regard to safety.

It shall be noted that, as the metal structure obtained during the treatment in the hot zone is self-supporting, the metal-coated polymer substrate can be treated in coiled form. Moreover, as the obtained metal structure is ductile, it can be unrolled after cooling.

Another advantage due to the strength of the metal structure is that it does not require extreme handling care. When the metal-coated polymer substrate is in strip form, it does not need to be supported on a conveyor belt. As a matter of fact, in a preferred embodiment, the metal-coated polymer substrate in strip form is made to slide on a sliding surface extending through the hot zone and through the cooling zone. The metal-coated polymer substrate can for example be submitted to a slight traction effort without causing any damage to the metal structure. To facilitate the progress of the metal-coated polymer substrate on the sliding surface, the latter is advantageously inclined towards the cooling zone.

Of course, conveying means may be employed, if desired, to support the metal-coated polymer substrate, for example when treating metal-coated polymer substrates having low mass surface density. Such conveying means may be a conveyor belt, as in conventional methods. However, a preferred alternative conveying means is a metal foil. Since the metal foil is much lighter than a conveyor belt, its thermal inertia is much lower and the metal foil is heated much quicker. The heating loss is thus reduced. When copper foam is produced from copper-coated polymer structure, the latter is preferably supported on a copper foil, which appears to be a by-product of conventional copper foil production. Such a supporting copper foil can be recycled at low cost after a single or multiple passages through the furnace.

According to another aspect of the invention, a furnace for producing a metal structure from a metal-coated polymer substrate is proposed. The furnace comprises:
- a hot zone,
- a cooling zone, adjacent to the hot zone and
- a surface extending through the hot zone and the cooling zone for moving the metal-coated polymer substrate, respectively the metal structure, through the hot zone and the cooling zone.

The hot zone comprises heating means to heat the hot zone to a temperature of at least 600°C, injecting means to inject water vapor into the hot zone in such a way as to maintain a water vapor concentration of at least 80 vol.%, and extraction means to extract gas from the hot zone. The cooling zone comprises injecting means to inject neutral and/or reducing gases into the cooling zone and at least part of the gases contained in the cooling zone are transferred to the hot zone and extracted from the hot zone through the extracting means.

The furnace may further comprise guiding means, for guiding the metal-coated polymer substrate, respectively the metal structure, through the hot zone and the cooling zone.

Such a furnace allows the production of metal foams from metal-coated polymer substrates in only two zones, and is thus more compact than conventional furnaces with three zones, respectively oxidizing, reducing/annealing, and cooling. Moreover, the present furnace is much safer than the conventional three-zone furnace, where a zone containing free oxygen lies next to a zone containing pure hydrogen. Indeed, in the present furnace, the gases of the two atmospheres may mix together without risk of explosion. This also simplifies the furnace construction and in particular the structure of the separation between the hot zone and the cooling zone, since a gas tight separation is not required. An advantageous separation between hot zone and cooling zone is provided by baffle means, which allow to control the gas flow from one zone to the other.

The present furnace is thus a simpler, safer and more compact furnace allowing the manufacture of metal foam from metal-coated polymer structures. The metal coating may be nickel, copper, and their alloys, or other metallic alloys resisting oxidation in water vapor at elevated temperatures.

The present furnace is particularly suited for the production of copper foams from copper-coated polymer substrates.

It is clear that, depending on whether the metal-coated polymer substrate is treated in coiled form or in strip form, the guiding means will be of different type.

As already explained, the metal structure obtained in the hot zone of the furnace is ductile and self-supporting. Therefore, the metal-coated polymer substrate does not need to be supported on a conveyor belt, which simplifies the structure of the furnace.

In a preferred embodiment, the furnace comprises a sliding surface extending through the hot zone and the cooling zone, on which the metal-coated polymer substrate is made to slide. Guiding means installed outside and/or inside the furnace may e.g. comprise a first roll arranged before the hot zone and a second roll arranged about the exit of the cooling zone. As the rolls rotate, the metal-coated polymer substrate progresses in the furnace by sliding In the sliding surface. The sliding surface may be formed by the upper surface of a sliding plate extending through the hot zone and the cooling zone. The sliding plate is preferably perforated to allow for an easy access of the water vapor to the strip, and for efficient evacuation of the reaction products.

Advantageously, the furnace is configured in such a way that the hot zone is at a higher level than the cooling zone, so that a part of the gases from the cooling zone flow to the hot zone where they are extracted with the gases from the hot zone. The extracted gases mainly contain water vapor, but also small quantities of carbon oxides and hydrogen formed *in situ* as a result of the foam oxidation, nitrogen and possibly hydrogen from the cooling zone, as well as thermal decomposition products of the organic foam. These gases may be burned for heating purposes, or evacuated through a propane flare tip.

### Brief description of the drawings

The present invention will now be described, by way of example, with reference to the accompanying drawings, in which:
- Fig.1:: is a schematic diagram of a two-zone-controlled-atmosphere furnace, in which a first embodiment of the method of the invention is implemented; and
- Fig.2:: is a schematic diagram of a two-zone-controlled-atmosphere furnace, in which a second embodiment of the method of the invention is implemented.

### Detailed description of a preferred embodiment

The present method relies on the heating of a metal-coated polymer structure by exposing it to a high temperature in a controlled water vapor atmosphere so as to remove the polymer substrate and produce a ductile metal foam structure.

The metal-coated polymer structure from which the metal foam is produced is generally obtained by electroplating a metal on a conductive polymer foam. A variety of metals, such as e.g. nickel, copper, iron, chromium, zinc, aluminum, lead, tin, gold, platinum or other metals belonging to the platinum group and their alloys, can be electroplated on such polymer foams as films, superposition of films or as blend of phases or structures in order to treat them according to the present method to obtain the corresponding metal foam. However, the present method is particularly adapted for the production of ductile copper, respectively nickel, foam structures from copper-coated, respectively nickel-coated, polymer structures.

The polymer substrate may consist of a reticulated open cell foam structure, closed cell foam structure, felt, woven or non woven structures or similar structures or any combination thereof. Acceptable polymer substrates include: polyester, polyurethane, polystyrene, polyvinylchloride, polyethylene, polyisocyanurates, polyphenols and polypropylene, paper or other cellulosic materials (carbon based natural or synthetic polymers). These polymers all thermally decompose and react with the water vapor in the hot zone to be oxidized. Particularly preferred foams are e.g. reticulated foams for industrial use that are available e.g. in strip form from companies of the British Vita Group (based in the United Kingdom) such as Caligen Europe B.V. (The Netherlands) and Crest Foam Inc. (USA) or from Recticet International (headquartered in Belgium).

It will be noted that the weight of the foams are expressed herein with reference to their "surface mass density". This term is herein understood as the mass of the apparent surface of the strip of foam. For example, if a foam has a surface mass density of 600 g/m² it means that a piece of foam having apparent external dimensions of 1 m x 2 m will have a mass of 1 200 g.

In fact, the real surface (including the surface of the pores) of the foam depends on its porosity. For example, a strip of foam having an apparent area of 1 m² (i.e. having external dimensions of 1 m x 1 m) and a porosity of 90 pores per inch will have a specific surface of about 200 to 300 m². The measure of the porosity is linear; it corresponds to the number of pores that are counted along a line of one inch in length.

Foams that are to be used to form the metal-coated polymer structures to be treated according to the present method will preferably have a porosity of 30 to 120 pores per inch, or even higher. For most applications, the thickness of the foams should preferably be in the range between 0.2 and 2 mm.

For example, when the present method is used to for manufacturing metal-coated polymer structures to be used as charge collectors in batteries, foams of about 1.6 mm in thickness will be used for secondary alkaline batteries, whereas thinner foams will be used for Li-Ion batteries.

Typically, foams of about 1.6 mm in thickness will be used for manufacturing metal-coated polymer structures to be used as charge collectors in secondary alkaline batteries, whereas thinner foams will typically be used for Li-ion batteries.

It will be understood that such foams must have some electrical conductivity as a prerequisite for electroplating. Various techniques for making the surface of a strip of foam electrically conductive may be used. A first preferred method to achieve this task uses electrically conductive polymers. Accordingly, the surface of the strip of foam is made electrically conductive by: firstly deposing on the strip of foam a monomer that is electrically conductive in a polymerized form, and then polymerizing the monomer into an electrically conductive polymer. Such a monomer may be pyrrole, which can be polymerized by oxidation-doping into electrically conductive polypyrrole.

Another preferred technique for rendering a strip of foam electrically conductive is vacuum deposition (also called "Physical Vapor Deposition" (PVD)). This includes magnetron sputtering as well as direct evaporation of metals contained in heated crucibles, such direct evaporation being also applicable for metal combinations. Vacuum deposition allows to form a coherent, thin metal pre-coating at the surface of the strip of foam. Actual vacuum deposition techniques allow to form, on a strip of foam, a thin metal pre-coating that has an improved conductivity; and the obtained composite strip has a better tear resistance than a strip of foam rendered conductive by chemical treatment. For the manufacture of copper foams, the strip of foam shall preferably be precoated with a very thin layer, of e.g. 1 to 10 g/m², preferably not more than 5 g/m², of copper deposited by vacuum deposition from heated crucibles containing liquid copper.

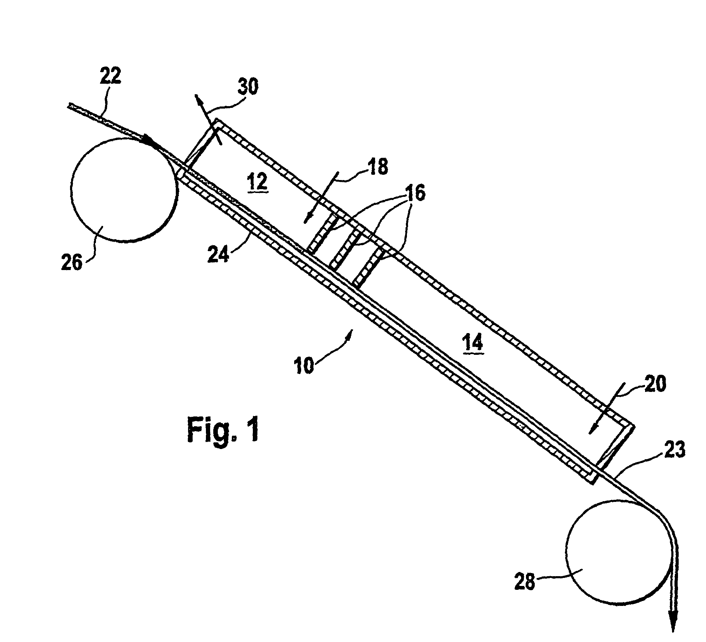

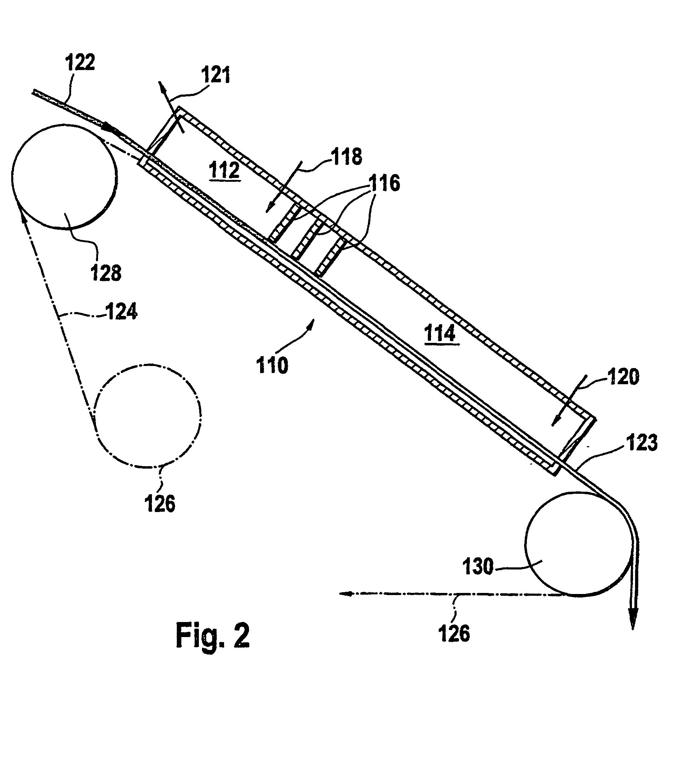

Two preferred embodiments of the method will now be described with reference to the furnace represented in Figs.1 and 2. In both embodiments, a copper-coated polymer structure is employed so as to produce copper foam. The copper-coated polymer structure may have a mass surface density ranging typically from 100 to 2500 g/m². Higher or lower coating weights can also be obtained on particular foam substrates. Regarding the thickness of the copper plating on the polymer foam structure, it shall preferably have a thickness in the range of 1 to 50 µm, more preferably between 2 and 15 µm, and most preferably above 8 µm.

Referring to Fig.1, a two-zone-atmosphere-controlled furnace 10 is schematically shown. The furnace 10 comprises a hot zone 12 and an adjacent cooling zone 14. The hot zone 12 is provided with heating means (not shown) that are adapted to create a temperature of at least 600°C therein. The atmosphere of the hot zone 12 is composed of at least 80 vol.% of water vapor and may be mixed with a neutral gas such as nitrogen. Preferably, the atmosphere in the hot zone is composed of about 90 vol.% of water vapour and more preferably of about 100 vol.%. The water vapor or the mixture is introduced through injecting means schematically represented by arrow 18. The atmosphere in the cooling zone 14 is also controlled, and advantageously consists of a gaseous mixture of N₂ with a maximum of 5 vol.% of H₂. This gaseous mixture is introduced in the furnace through injecting means schematically represented by arrow 20. It will be noted that the presence of hydrogen in the cooling zone is not required for carrying out the present method; but at industrial scale, it allows to compensate for air leaks. The hot zone 12 and the cooling zone 14 are separated from each other by means of a series of baffles 16. They provide a convenient separation, which allows to control the flow of gas between the two zones. Indeed, it shall be noted that the gases of the two zones 12 and 14 can mix with each other without danger, so that a gas tight separation is not needed. To minimize the entry of ambient air into the hot zone and the cooling zone, the latter are preferably operated at a slight overpressure.

Furthermore, in order to avoid oxidation at low temperatures of the finished metal foam, recirculation of water vapor into the cooling zone can be prevented by increasing the pressure in the cooling zone and/or by favoring a "chimney effect" in the hot zone in the case where the furnace is tilted with the hot zone placed at a higher level than the cooling zone.

Reference sign 22 indicates a copper-coated polymer substrate in strip form to be treated in the furnace 10. The copper-coated polymer substrate 22 is introduced into the hot zone 12 and is then continuously guided through the furnace 10 so as to travel through both zones. In the hot zone 12, the polymer substrate is thermally decomposed due to the high temperature which is preferably of about 900 to 950°C and the presence of water vapor. The carbon from the polymer reacts with the water vapor to form carbon oxides and hydrogen.

In particular, it should be noted that the polymer removal is carried out in an atmosphere which is basically free of molecular oxygen. The polymer is thus removed and a polymer-free copper structure 23 is obtained. The water vapor in the hot zone is not oxidizing to the copper, which thus remains in its metallic state. It will be appreciated that the use of a 100% water vapor atmosphere is particularly preferred for treating copper-coated polymer structures.

The high temperature has an annealing effect on the metal, thereby inducing recristatlisation and improving its ductility. As a result, at the end of the hot zone 12, a polymer-free, ductile copper foam structure is obtained. The copper structure 23 then enters the cooling zone 14, in which it is cooled down to a temperature between 20 and 75°C in a controlled manner.

In the present embodiment, at the level of the baffles 16 the temperature in the cooling zone 14 approaches that in the hot zone 12, and at the end of the cooling zone 14 the temperature is of about 50°C. The slightly reducing atmosphere maintained in the cooling zone 14 permits to avoid oxidation of the copper structure 23 and causes the reduction of any trace of copper oxide.

It shall be appreciated that the copper-coated polymer substrate 22 is not necessarily supported on a conveyor belt in furnace 10. This is possible since in the present method, copper is not oxidized and thus remains self-supporting, as already explained. In this preferred embodiment, the copper-coated polymer substrate 22 is made to slide on a sliding surface 24 of the furnace 10, which is formed by the furnace floor. Although not shown, the furnace 10 may have a generally cylindrical inner shape and the furnace floor may be formed by a perforated plate placed at half height within the cylindrical furnace, In order to reduce frictional forces of the copper-coated polymer substrate 22 on the sliding surface 24, the furnace floor should be relatively smooth. Due to the light weight of the copper-coated polymer substrate 22 and the smoothness of the sliding surface 24, the copper-coated polymer substrate 22 can easily be made to slide. In Fig.1, two rolls 26 and 28 are provided for guiding the copper-coated polymer substrate 22 through the furnace 10. The first roll 26 supports the copper-coated polymer substrate 22 before its entry into the hot zone 12 and the second roll 28 is arranged about the exit of the cooling zone 14 in order to collect the produced copper foam structure. The rotation of the two rolls is synchronized in such a way that―depending on the slope of the furnace-either the first roll 26 or the second roll 28 exerts a slight traction effort on the copper-coated polymer substrate 22. As a result, the copper-coated polymer substrate 22 progresses in the furnace 10 without damage. During the passage through the hot zone, the metallic foam may shrink by up to 30% in all three dimensions, and this phenomenon shall advantageously be taken into consideration for synchronizing the upper, first roll 26 and the lower, second roll 28.

As can be noticed in Fig.1, the furnace 10 is advantageously inclined in such a way that the hot zone 12 is at a higher level than the cooling zone 14. The sliding surface 24 thus defines a descending slope towards the cooling zone 14, which facilitates the progress of the copper-coated polymer substrate 22 in the furnace 10. Depending on the slope of the furnace respectively of the sliding surface, the copper-coated polymer substrate slides through the furnace under the effect of gravity. In that case, the first roll 26 will be used to control the speed of the copper-coated polymer substrate 22 traveling through the furnace.

This configuration also has an impact on the gas flow within the furnace. As can be understood from Fig.1, the gaseous mixture of N₂ and H₂ is introduced into the furnace 10 in the end part of the cooling zone 12. This gaseous mixture then travels through the cooling zone, in opposed direction to the copper-coated polymer substrate 22, thereby ensuring the cooling of the latter. The separation baffles 16 are arranged between the hot zone and the cooling zone in such a way as to allow at least part of the gaseous mixture from the cooling zone 14 to flow to the hot zone 12. The gases from the hot zone 12, i.e. essentially water vapor and some small amounts of carbon oxides (CO and CO₂) and H₂ formed therein as well as N₂ and H₂ from the cooling zone 14, are extracted in the higher part of the furnace, at the level of arrow 30, and burned in a propane flare tip.

Referring now to Fig.2, a furnace 110 equivalent to that of Fig.1 is shown. Similarly, it comprises a hot zone 112 in which a temperature of 900 to 950°C prevails and in which an atmosphere essentially composed of water vapor is maintained. Water vapor is introduced into the hot zone at the level of arrow 118. Adjacent to the hot zone 112 is a cooling zone 114 with a controlled atmosphere essentially consisting of nitrogen with 5 vol.% of hydrogen. This gaseous mixture of nitrogen and hydrogen is introduced in the furnace 110 at the level of arrow 120. The two zones 112 and 114 are separated by means of baffles 116. As in Fig.1, the furnace 110 is inclined towards the cooling zone 114 and a part of the gases from the cooling zone 114 flows to the hot zone 112, where they are extracted together with the other gases at the level of arrow 121 to be burned in a propane flare tip.

Reference sign 122 indicates a copper-coated polymer substrate 122, which is to be treated in furnace 110. According to this second preferred embodiment, the copper-coated polymer substrate 122 is supported in the furnace 110 on a copper foil 124. The use of a supporting copper foil 124 is particularly suitable when treating fragile, low weight copper-coated polymer substrates 122, e.g. having a mass surface density below 450 g/m², typically between 100 and 300 g/m².

As illustrated in Fig.1, the copper foil 124, stored on a supply roll 126, is lead to an assembly roll 128. The copper-coated polymer substrate 122 is also guided to the assembly roll, in such a way as to be placed on top of the copper foil 124. The copper-coated polymer substrate 122 then enters the furnace 110 on the copper foil 124. As the copper-coated polymer substrate 122 continuously passes through the furnace 110, the polymer substrate is removed and the obtained copper structure 123 is cooled. At the end of the cooling zone 114, the copper structure 123 supported on the copper foil 124 is collected on a separation roll 130, on which they are separated.

As for the first embodiment, the copper-coated polymer substrate 122 progresses in the furnace 110 due to the rotation of the two rolls 128 and 130. However, it shall be noted that the traction effort is not exerted on the copper-coated polymer substrate 122 but on the copper foil 124. It is also clear that the copper-coated polymer substrate 122 is not in contact with the furnace floor, as it lies on the copper foil 124. The copper-coated polymer substrate 122 is thus protected from any damage, tearing or deformation during its travel in the furnace 110.

From a thermal point of view, a copper foil is more interesting than a conveyor belt. Indeed, a conveyor belt typically has a surface mass density of 10 to 15 kg/m² whereas the surface mass density of suitable copper foils may be typically between 100-200 g/m². The copper thus has a much lower thermal inertia than a conveyor belt and is heated much quicker, whereby heating loss is reduced. Furthermore, the copper foil can be recycled after use in the production of the metal-coated polymer substrate.

## Claims

1. A method for producing a metal structure comprising the following steps:
• providing a metal-coated polymer substrate;
• heating the metal-coated polymer substrate in a hot zone, in which a temperature of at least 600°C prevails and in which an atmosphere composed of at least 80 vol.% of water vapor is maintained, so as to remove the polymer substrate and form a metal structure; and
• cooling the metal structure in a cooling zone.

2. The method according to claim 1, **characterized in that** the temperature in the hot zone is of at least 650°C, preferably of about 900 to 950°C.

3. The method according to claim 1 or 2, **characterized in that** the atmosphere in the hot zone is composed of about 90 vol.% of water vapor, more preferably of about 100 vol.%.

4. The method according to claim 1, 2 or 3, **characterized in that** an atmosphere essentially composed of nitrogen is maintained in the cooling zone.

5. The method according to any one of the preceding claims, **characterized in that** the metal-coated polymer substrate, respectively the metal structure, is continuously guided through the hot zone and through the cooling zone.

6. The method according to any one of the preceding claims, **characterized in that** the metal-coated polymer substrate, respectively the metal structure, is made to slide on a sliding surface in the hot zone and in the cooling zone.

7. The method according to claim 6, **characterized in that** the sliding surface defines a descending slope towards the cooling zone.

8. The method according to any one of the preceding claims, **characterized in that** the metal-coated polymer substrate, respectively the metal structure, is guided through the hot zone and the cooling zone on conveying means.

9. The method according to claim 8, **characterized in that** the conveying means is a moving metal foil.

10. The method according to any one of the preceding claims, **characterized in that** the metal-coated polymer substrate is in coiled form.

11. The method according to any one of claims 1 to 9, **characterized in that** the metal-coated polymer substrate is in strip form.

12. The method according to any one of the preceding claims, **characterized in that** the metal of the metal-coated polymer substrate is chosen among the group consisting of nickel, copper, iron, chromium, zinc, aluminum, lead, tin, gold, platinum or other metals belonging to the platinum group, and their alloys.

13. The method according to any one of claims 1 to 12, **characterized in that** the metal-coated polymer substrate is a copper-coated polymer substrate or nickel-coated polymer substrate.

14. The method according to any one of the preceding claims, **characterized in that** the hot zone and the cooling zone are configured in such a way as to allow at least part of the gases contained in the cooling zone to flow to the hot zone.

15. The method according to any one of the preceding claims, **characterized in that** said polymer substrate is made from a material selected from the group comprising reticulated open cell foam structures, closed cell foam structures, felt, woven or non-woven structures or similar structures, and their combinations.

16. A furnace for producing a metal structure from a metal-coated polymer substrate comprising:
• a hot zone,
• a cooling zone, adjacent to the hot zone;
• a surface extending through the hot zone and the cooling zone for moving the metal-coated polymer substrate respectively the metal structure through the hot zone and the cooling zone, the surface defining a descending slope towards the cooling zone;
wherein the hot zone comprises heating means to heat the hot zone to a temperature of at least 600°C, injecting means to inject water vapor into the hot zone in such a way as to maintain a water vapor concentration of at least 80 vol.%, and extraction means to extract gas from the hot zone; and
wherein the cooling zone comprises injecting means to inject neutral and/or reducing gases into the cooling zone, and wherein at least part of the gases contained in the cooling zone are transferred to the hot zone and extracted form the hot zone through the extracting means.

17. The furnace according to claim 16, **characterized in that** water vapor is injected in the hot zone in such a way that a water vapor concentration of about 90 vol.%, preferably about 100 vol.%, is maintained therein.

18. The furnace according to claim 16 or 17, **characterized by** baffle means separating the hot zone from the cooling zone.

19. The furnace according to any one of the claims 16 to 18, **characterized by** conveying means guiding the metal-coated polymer substrate, respectively the metal structure, through the hot zone and the cooling zone

20. The furnace according to claim 19, **characterized in that** the conveying means is a moving metal foil.

21. The furnace according to any one of claims 16 to 20, **characterized in that** the metal-coated polymer substrate is in coiled form.

22. The furnace according to any one of claims 16 to 20, **characterized in that** the metal-coated polymer substrate is in strip form.

23. The furnace according to any one of claims 16 to 22, **characterized in that** the metal of the metal-coated polymer substrate is chosen among the group consisting of nickel, copper, iron, chromium, zinc, aluminum, lead, tin, gold, platinum or other metals belonging to the platinum group and their alloys.

24. The furnace according to any one of claims 16 to 22, **characterized in that** the metal-coated polymer substrate is a copper-coated polymer substrate or a nickel-coated polymer substrate.

25. The furnace according to any one of claims 16 to 24, **characterized in that** said polymer substrate is made from a material selected from the goup comprising reticulated open cell foam structures, closed cell foam structures, felt, woven or non-woven structures or similar structures, and their combinations

## Patentansprüche

1. Verfahren zur Herstellung einer Metallstruktur, umfassend folgende Schritte:
• Bereitstellung eines metallbeschichteten Polymersubstrats;
• Erwärmung des metallbeschichteten Polymersubstrats in einer Heißzone, in der eine Temperatur von mindestens 600°C vorherrscht und in der eine aus mindestens 80 Vol.-% Wasserdampf bestehende Atmosphäre aufrechterhalten wird, um so das Polymersubstrat zu entfernen und eine Metallstruktur zu bilden; und
• Abkühlung der Metallstruktur in einer Kühlzone.

2. Verfahren nach Anspruch 1, **dadurch gekennzeichnet, dass** die Temperatur in der Heißzone mindestens 650°C, vorzugsweise ungefähr 900 bis 950°C, beträgt.

3. Verfahren nach Anspruch 1 oder 2, **dadurch gekennzeichnet, dass** die Atmosphäre in der Heißzone aus ungefähr 90 Vol.-% Wasserdampf, bevorzugter ungefähr 100 Vol.-% Wasserdampf, besteht.

4. Verfahren nach Anspruch 1, 2 oder 3, **dadurch gekennzeichnet, dass** in der Kühlzone eine im Wesentlichen aus Stickstoff bestehende Atmosphäre aufrechterhalten wird.

5. Verfahren nach irgendeinem der vorangehenden Ansprüche, **dadurch gekennzeichnet, dass** das metallbeschichtete Polymersubstrat beziehungsweise die Metallstruktur kontinuierlich durch die Heißzone und durch die Kühlzone geführt wird.

6. Verfahren nach irgendeinem der vorangehenden Ansprüche, **dadurch gekennzeichnet, dass** das metallbeschichtete Polymersubstrat beziehungsweise die Metallstruktur auf einer Gleitfläche in der Heißzone und in der Kühlzone gleiten gelassen wird.

7. Verfahren nach Anspruch 6, **dadurch gekennzeichnet, dass** die Gleitfläche eine Abwärtsneigung in Richtung der Kühlzone definiert.

8. Verfahren nach irgendeinem der vorangehenden Ansprüche, **dadurch gekennzeichnet, dass** das metallbeschichtete Polymersubstrat beziehungsweise die Metallstruktur auf einem Fördermittel durch die Heißzone und die Kühlzone geführt wird.

9. Verfahren nach Anspruch 8, **dadurch gekennzeichnet, dass** das Fördermittel eine bewegliche Metallfolie ist.

10. Verfahren nach irgendeinem der vorangehenden Ansprüche, **dadurch gekennzeichnet, dass** das metallbeschichtete Polymersubstrat zugerollt vorliegt.

11. Verfahren nach irgendeinem der Ansprüche 1 bis 9, **dadurch gekennzeichnet, dass** das metallbeschichtete Polymersubstrat in Bandform vorliegt.

12. Verfahren nach irgendeinem der vorangehenden Ansprüche, **dadurch gekennzeichnet, dass** das Metall des metallbeschichteten Polymersubstrats aus der Gruppe bestehend aus Nickel, Kupfer, Eisen, Chrom, Zink, Aluminium, Blei, Zinn, Gold, Platin oder anderen Metallen der Platingruppe, sowie deren Legierungen ausgewählt wird.

13. Verfahren nach irgendeinem der Ansprüche 1 bis 12, **dadurch gekennzeichnet, dass** das metallbeschichtete Polymersubstrat ein kupferbeschichtetes Polymersubstrat oder nickelbeschichtetes Polymersubstrat ist.

14. Verfahren nach irgendeinem der vorangehenden Ansprüche, **dadurch gekennzeichnet, dass** die Heißzone und die Kühlzone so angeordnet sind, dass zumindest ein Teil der in der Kühlzone enthaltenen Gase zur Heißzone strömen kann.

15. Verfahren nach irgendeinem der vorangehenden Ansprüche, **dadurch gekennzeichnet, dass** das Polymersubstrat aus einem Material besteht, das aus der Gruppe bestehend aus vernetzten offenzelligen Schaumstrukturen, geschlossenzelligen Schaumstrukturen, Filz-, Web- oder Vliesstrukturen oder ähnlichen Strukturen, sowie deren Kombinationen ausgewählt wird.

16. Ofen zur Herstellung einer Metallstruktur aus einem metallbeschichteten Polymersubstrat, umfassend:
• eine Heißzone;
• eine Kühlzone, die an die Heißzone angrenzt; und
• eine Oberfläche, die durch die Heißzone und die Kühlzone verläuft, um das metallbeschichtete Polymersubstrat beziehungsweise die Metallstruktur durch die Heißzone und die Kühlzone zu bewegen, wobei die Oberfläche eine Abwärtsneigung in Richtung der Kühlzone definiert;
wobei die Heißzone umfasst: Heizmittel, um die Heißzone auf eine Temperatur von mindestens 600°C zu erhitzen; Einspritzmittel, um Wasserdampf so in die Heißzone einzuspritzen, dass eine Wasserdampfkonzentration von mindestens 80 Vol.-% aufrechterhalten wird; und Austragsmittel, um Gas aus der Heißzone herauszuführen; und
wobei die Kühlzone Eihspritzmittel umfasst, um neutrale und/oder reduzierende Gase in die Kühlzone einzuspritzen, und wobei zumindest ein Teil der in der Kühlzone enthaltenen Gase in die Heißzone geleitet und durch die Austragsmittel aus der Heißzone herausgeführt wird.

17. Ofen nach Anspruch 16, **dadurch gekennzeichnet, dass** Wasserdampf so in die Heißzone eingespritzt wird, dass darin eine Wasserdampfkonzentration von ungefähr 90 Vol.-%, vorzugsweise ungefähr 100 Vol.-%, aufrechterhalten wird.

18. Ofen nach Anspruch 16 oder 17, **gekennzeichnet durch** Ablenkmittel, die die Heißzone von der Kühlzone trennen.

19. Ofen nach irgendeinem der Ansprüche 16 bis 18, **gekennzeichnet durch** ein Fördermittel, das das metallbeschichtete Polymersubstrat beziehungsweise die Metallstruktur **durch** die Heißzone und die Kühlzone führt.

20. Ofen nach Anspruch 19, **dadurch gekennzeichnet, dass** das Fördermittel eine bewegliche Metallfolie ist.

21. Ofen nach irgendeinem der Ansprüche 16 bis 20, **dadurch gekennzeichnet, dass** das metallbeschichtete Polymersubstrat zugerollt vorliegt.

22. Ofen nach irgendeinem der Ansprüche 16 bis 20, **dadurch gekennzeichnet, dass** das metallbeschichtete Polymersubstrat in Bandform vorliegt.

23. Ofen nach irgendeinem der Ansprüche 16 bis 22, **dadurch gekennzeichnet, dass** das Metall des metallbeschichteten Polymersubstrats aus der Gruppe bestehend aus Nickel, Kupfer, Eisen, Chrom, Zink, Aluminium, Blei, Zinn, Gold, Platin oder anderen Metallen der Platingruppe, sowie deren Legierungen ausgewählt wird.

24. Ofen nach irgendeinem der Ansprüche 16 bis 22, **dadurch gekennzeichnet; dass** das metallbeschichtete Polymersubstrat ein kupferbeschichtetes Polymersubstrat oder nickelbeschichtetes Polymersubstrat ist.

25. Ofen nach irgendeinem der Ansprüche 16 bis 24, **dadurch gekennzeichnet, dass** das Polymersubstrat aus einem Material besteht, das aus der Gruppe bestehend aus vernetzten offenzelligen Schaumstrukturen, geschlossenzelligen Schaumstrukturen, Filz-, Web- oder Vliesstrukturen oder ähnlichen Strukturen, sowie deren Kombinationen ausgewählt wird.

## Revendications

1. Procédé de production d'une structure métallique comprenant les étapes suivantes consistant à :
• prévoir un substrat polymère revêtu de métal;
• chauffer le substrat polymère revêtu de métal dans une zone chaude, dans laquelle règne une température d'au moins 600°C et dans laquelle une atmosphère composée d'au moins 80 % en volume de vapeur d'eau est maintenue, de façon à supprimer le substrat polymère et à former une structure métallique; et
• refroidir la structure métallique dans une zone de refroidissement.

2. Procédé selon la revendication 1, **caractérisé en ce que** la température dans la zone chaude est d'au moins 650°C, de préférence comprise entre environ 900 et 950°C.

3. Procédé selon la revendication 1 ou 2, **caractérisé en ce que** l'atmosphère dans la zone chaude est composée d'environ 90 % en volume de vapeur d'eau, plus préférablement d'environ 100 % en volume.

4. Procédé selon la revendication 1, 2 ou 3, **caractérisé en ce qu'**une atmosphère composée essentiellement d'azote est maintenue dans la zone de refroidissement.

5. Procédé selon l'une quelconque des revendications précédentes, **caractérisé en ce que** le substrat polymère revêtu de métal, respectivement la structure métallique, est guidé en continu à travers la zone chaude et à travers la zone de refroidissement.

6. Procédé selon l'une quelconque des revendications précédentes, **caractérisé en ce que** le substrat polymère revêtu de métal, respectivement la structure métallique, est amené à glisser sur une surface de glissement dans la zone chaude et dans la zone de refroidissement.

7. Procédé selon la revendication 6, **caractérisé en ce que** la surface de glissement définit une pente descendante vers la zone de refroidissement.

8. Procédé selon l'une quelconque des revendications précédentes, **caractérisé en ce que** le substrat polymère revêtu de métal, respectivement la structure métallique, est guidé à travers la zone chaude et la zone de refroidissement sur des moyens de transport.

9. Procédé selon la revendication 8, **caractérisé en ce que** les moyens de transport sont une feuille métallique en déplacement.

10. Procédé selon l'une quelconque des revendications précédentes, **caractérisé en ce que** le substrat polymère revêtu de métal est sous forme bobinée.

11. Procédé selon l'une quelconque des revendications 1 à 9, **caractérisé en ce que** le substrat polymère revêtu de métal est sous forme de bande.

12. Procédé selon l'une quelconque des revendications précédentes, **caractérisé en ce que** le métal du substrat polymère revêtu de métal est choisi dans le groupe constitué du nickel, du cuivre, du fer, du chrome, du zinc, de l'aluminium, du plomb, de l'étain, de l'or, du platine ou d'autres métaux appartenant au groupe du platine, et de leurs alliages.

13. Procédé selon l'une quelconque des revendications 1 à 12, **caractérisé en ce que** le substrat polymère revêtu de métal est un substrat polymère à revêtement de cuivre ou un substrat polymère à revêtement de nickel.

14. Procédé selon l'une quelconque des revendications précédentes, **caractérisé en ce que** la zone chaude et la zone de refroidissement sont configurées de façon à permettre à au moins une partie des gaz contenus dans la zone de refroidissement de circuler vers la zone chaude.

15. Procédé selon l'une quelconque des revendications précédentes, **caractérisé en ce que** ledit substrat polymère est réalisé à partir d'un matériau sélectionné dans le groupe comprenant des structures en mousse réticulée à cellules ouvertes, des structures en mousse à cellules fermées, du feutre, des structures tissées ou non-tissées ou des structures similaires et leurs combinaisons.

16. Four de production d'une structure métallique à partir d'un substrat polymère revêtu de métal comprenant :
• une zone chaude,
• une zone de refroidissement, adjacente à la zone chaude;
• une surface s'étendant à travers la zone chaude et la zone de refroidissement pour déplacer les substrats polymères à revêtement métallique, respectivement la structure métallique, à travers la zone chaude et la zone de refroidissement, la surface définissant une pente descendante vers la zone de refroidissement;
dans lequel la zone chaude comprend des moyens de chauffage pour chauffer la zone chaude à une température d'au moins 600°C, un moyen d'injection pour injecter de la vapeur d'eau dans la zone chaude de manière à maintenir une concentration en vapeur d'eau d'au moins 80 % en volume, et un moyen d'extraction pour extraire les gaz de la zone chaude; et
dans lequel la zone de refroidissement comprend un moyen d'injection pour injecter des gaz neutres et/ou réducteurs dans la zone de refroidissement, et dans lequel au moins une partie des gaz contenus dans la zone de refroidissement est transférée à la zone chaude et est extraite de la zone chaude par l'intermédiaire du moyen d'extraction.

17. Four selon la revendication 16, **caractérisé en ce que** la vapeur d'eau est injectée dans la zone chaude de sorte qu'une concentration en vapeur d'eau d'environ 90 % en volume, de préférence d'environ 100 % en volume, y est maintenue.

18. Four selon la revendication 16 ou 17, **caractérisé par** des moyens formant chicanes séparant la zone chaude de la zone de refroidissement.

19. Four selon l'une quelconque des revendications 16 à 18, **caractérisé par** un moyen de transport guidant le substrat polymère revêtu de métal, respectivement la structure métallique, à travers la zone chaude et la zone de refroidissement.

20. Four selon la revendication 19, **caractérisé en ce que** le moyen de transport est une feuille métallique en déplacement.

21. Four selon l'une quelconque des revendications 16 à 20, **caractérisé en ce que** le substrat polymère revêtu de métal est sous forme bobinée.

22. Four selon l'une quelconque des revendications 16 à 20, **caractérisé en ce que** le substrat polymère revêtu de métal est sous forme de bande.

23. Four selon l'une quelconque des revendications 16 à 22, **caractérisé en ce que** le métal du substrat polymère revêtu de métal est choisi dans le groupe constitué du nickel, du cuivre, du fer, du chrome, du zinc, de l'aluminium, du plomb, de l'étain, de l'or, du platine ou d'autres métaux appartenant au groupe du platine et de leurs alliages.

24. Four selon l'une quelconque des revendications 16 à 22, **caractérisé en ce que** le substrat polymère revêtu de métal est un substrat polymère à revêtement de cuivre ou un substrat polymère à revêtement de nickel.

25. Four selon l'une quelconque des revendications 16 à 24, **caractérisé en ce que** ledit substrat polymère est réalisé à partir d'un matériau sélectionné dans le groupe comprenant des structures en mousse réticulée à cellules ouvertes, des structures en mousse à cellules fermées, du feutre, des structures tissées ou non-tissées ou des structures similaires, et de leurs combinaisons.
